# EUROPEAN PATENT APPLICATION

(11) **EP 3 940 569 A1**
(43) Date of publication of application: **19.01.2022**
(21) Application number: 19919612.2
(22) Date of filing: 15.03.2019
(51) Int. Cl.: G06F 21/62

(54) **PERSONAL INFORMATION MANAGEMENT DEVICE, PERSONAL INFORMATION MANAGEMENT SYSTEM, PERSONAL INFORMATION MANAGEMENT METHOD, AND PROGRAM**

(71) Applicant: MITSUBISHI ELECTRIC CORPORATION, Chiyoda-ku Tokyo 100-8310 (JP)
(72) Inventor: MIZUNO Kanji, Tokyo 100-8310 (JP); TAMURA Naoki, Tokyo 100-8310 (JP)
(74) Representative: Studio Torta S.p.A.
(86) International application number: PCT/JP2019/011005
(87) International publication number: WO 2020/188665

(57) **Abstract**

A personal information management device (10) includes a transfer request acquirer (101) to acquire a transfer request indicating a request for transfer of personal information processed by the personal information management device (10) to a second region that is different from a first region where the personal information management device (10) exists, a satisfaction information acquirer (103) to acquire satisfaction information indicating a degree to which the second region satisfies transfer requirements for transfer of the personal information to the second region, a confirmer (104) to notify an individual, which is indicated in the personal information, of the satisfaction information and confirm the individual whether the individual consents to the transfer of the personal information to the second region, and a transferor (105) to transfer the personal information to the second region in response to the consent.

## Description

### Technical Field

The present disclosure relates to a personal information management device, a personal information management system, a personal information management method, and a program.

### Background Art

Under laws and regulations related to protection of personal information, such as personal information protection acts in individual states and the general data protection regulation (GDPR) in Europe, the transfer of personal information to another region outside the state or outside the European region, for example, requires a consent of the individual indicated in the personal information in principle. Patent Literature 1 discloses a personal information distribution control system that confirms with the individual indicated in personal information whether the individual consents to transfer of the personal information in response to a request for transfer of the personal information.

### Citation List

### Patent Literature

Patent Literature 1: International Publication No. WO 2009/101755

### Summary of Invention

### Technical Problem

In some cases of transfer of personal information to an accredited region acknowledged by the accreditation organization, the personal information may be transferred without a consent of the individual under the laws and regulations related to protection of personal information. For example, the GDPR allows a manager of personal information to transfer the personal information without a consent of the individual in the case of transfer of personal information to an accredited state acknowledged to be satisfactory by the European Commission, which is the accreditation organization.

In contrast, in response to a request for transfer of personal information to a non-accredited region, the manager of the personal information needs to inform the individual of risks that can be caused by the transfer of the personal information to the non-accredited region and then needs to obtain a consent of the individual.

The risks that can be caused by transfer of personal information are different between non-accredited regions because these regions manage personal information in mutually different manners. In general, the individual cannot readily find out the manner of managing personal information in each region. This situation prevents the individual from readily evaluating the risks that can be caused by transfer of the personal information. In the personal information distribution control system disclosed in Patent Literature 1, the individual also cannot readily evaluate the risks that can be caused by transfer of the personal information.

An objective of the present disclosure, which has been accomplished in view of the above situations, is to provide a personal information management device that enables the individual to readily evaluate the risks that can be caused by transfer of the personal information, for example.

### Solution to Problem

In order to achieve the above objective, a personal information management device according to an aspect of the present disclosure includes: transfer request acquisition means for acquiring a transfer request indicating a request for transfer of personal information processed by the personal information management device to a second region that is different from a first region where the personal information management device exists; satisfaction information acquisition means for acquiring satisfaction information indicating a degree to which the second region satisfies transfer requirements for transfer of the personal information to the second region; confirmation means for notifying an individual, which is indicated in the personal information, of the satisfaction information, and confirming with the individual whether the individual consents to the transfer of the personal information to the second region; and transfer means for transferring the personal information to the second region in response to the consent.

### Advantageous Effects of Invention

According to an aspect of the present disclosure, the individual is informed of the satisfaction information, which indicates a degree to which the second region satisfies the transfer requirements, and therefore can readily evaluate the risks that can be caused by transfer of the personal information.

### Brief Description of Drawings

FIG. 1 illustrates a configuration of a personal information management system according to an embodiment of the present disclosure;
FIG. 2 is a sequence diagram illustrating a summary of processing of personal information in a personal information management device according to the embodiment of the present disclosure;
FIG. 3 illustrates a functional configuration of the personal information management device according to the embodiment of the present disclosure;
FIG. 4 illustrates exemplary personal information according to the embodiment of the present disclosure;
FIG. 5 illustrates exemplary satisfaction information according to the embodiment of the present disclosure;
FIG. 6 illustrates an exemplary confirmation screen displayed on an individual terminal according to the embodiment of the present disclosure;
FIG. 7 illustrates exemplary transfer information according to the embodiment of the present disclosure;
FIG. 8 illustrates a functional configuration of a personal information storage device according to the embodiment of the present disclosure;
FIG. 9 illustrates a functional configuration of a registry data storage device according to the embodiment of the present disclosure; and
FIG. 10 illustrates an exemplary hardware configuration of the personal information management device according to the embodiment of the present disclosure.

### Description of Embodiments

A personal information management system according to an embodiment of the present disclosure is described with reference to the accompanying drawings. In these drawings, the components identical or corresponding to each other are provided with the same reference symbol.

### Embodiment

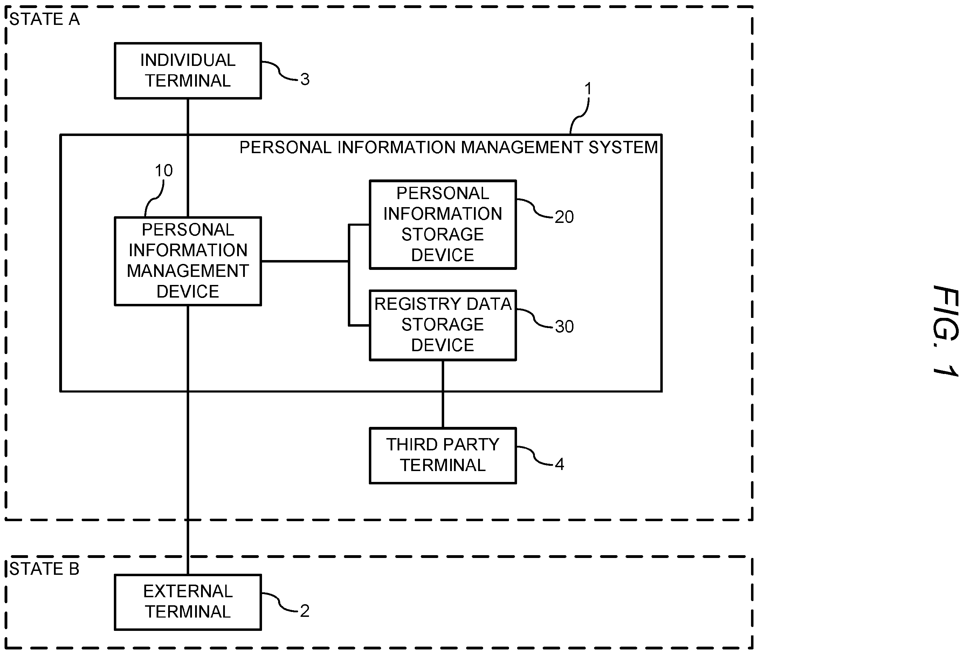

A personal information management system 1 according to the embodiment of the present disclosure is described with reference to FIG. 1. The personal information management system 1 is intended to respond to a request for transfer of personal information from a state B, which is different from a state A where the personal information management system 1 is operated. The personal information management system 1 is equipped with a personal information management device 10, a personal information storage device 20, and a registry data storage device 30. The personal information management device 10 is connected to an external terminal 2 and an individual terminal 3 so as to communicate with each other. The registry data storage device 30 is connected to a third party terminal 4 so as to communicate with each other. The personal information management system 1 is an example of a personal information management system according to the present disclosure.

In the following description, the state A indicates a state within the European region and the state B indicates a state outside the European region. The personal information management system 1 is assumed to be a system designed in compliance with the GDPR. Although the term "Europe" or "European region" means the European economic region in the strict sense, the region is referred to simply as "Europe" or "European region" for the purpose of simplification. Europe is an example of a first region according to the present disclosure, and the state B is an example of a second region according to the present disclosure.

The following description assumes that the personal information management system 1 is operated by a corporation X in the state A. The description also assumes that a corporation Y in the state B requests transfer of personal information managed by the personal information management system 1, using the external terminal 2. An individual indicated in the personal information corresponds to the user of the individual terminal 3 and is resident in the state A.

The term "transfer" of personal information in the specification means processing the personal information such that the origin of a transfer request can recognize the personal information. For example, the meaning of the term "transfer" of personal information involves transmitting the personal information to the origin of the transfer request via email, sending a sheet on which the content of the personal information is printed to the origin of the transfer request by mail, and posting the personal information on a website operated by the origin of the transfer request.

The following description contains the term "transfer requirements". The transfer requirements indicate the requirements defined by laws and regulations which a state should satisfy for transfer of personal information. The index representing a degree to which a state satisfies the transfer requirements is hereinafter referred to as "satisfaction degree". States that satisfy the transfer requirements correspond to accredited states acknowledged by the accreditation organization. The transfer of personal information to an accredited state is permitted without a consent of the individual. In the following description that assumes the GDPR as mentioned above, the accreditation organization corresponds to the European Commission, and the accredited states indicate the states acknowledged to be satisfactory by the European Commission. The transfer requirements contain multiple requirements. For example, the transfer requirements contain 100 or more requirements under the GDPR.

The external terminal 2, which exists in the state B and is operated by the corporation Y, transmits a transfer request to the personal information management device 10, which exists in the state A. The transfer request indicates a request for transfer of personal information.

The personal information management device 10 is intended to respond to a request for transfer of personal information from the external terminal 2. The personal information management device 10 processes the personal information depending on satisfaction information on the state B and a consent or refusal of the individual, as is described in detail below. The personal information management device 10 also causes transfer information to be stored into the registry data storage device 30, the transfer information being information related to the transfer of the personal information. The transfer information contains, for example, data that a request for transfer of the personal information has been received, and data that the individual has consented or refused the transfer, as is described in detail below. The personal information management device 10 has a functional configuration described below. The personal information management device 10 is an example of a personal information management device according to the present disclosure.

The personal information storage device 20 stores personal information managed by the personal information management device 10. The personal information storage device 20 is a database server for storing personal information, for example. The personal information storage device 20 has a functional configuration described below.

The registry data storage device 30 stores the transfer information input from the personal information management device 10 in the form of registry data in the chronological order. The registry data stored in the registry data storage device 30 is established in a format, such as blockchain or distributed database, that is less susceptible to tampering of data. Since the registry data is established in such a tamper-proof format, the transfer information can be used as a legal evidence in the case of any legal problem related to transfer of personal information. The use of transfer information as a legal evidence can avoid a problem that an individual consented to transfer of personal information but denies the fact of consent at a later date, for example. The registry data storage device 30 also has a function of disclosing transfer information to predetermined third parties, such as government and municipal officials and lawyers, which is described in detail below. This function allows the third parties to obtain the transfer information as a legal evidence. The registry data storage device 30 has a functional configuration described below.

The individual terminal 3 receives a notification, which indicates reception of a request for transfer of personal information from the corporation Y in the state B, satisfaction information on the state B, and risks that can be caused by transfer of the personal information, and receives an inquiry to confirm whether the individual consents to transfer of the personal information, from the personal information management device 10. In response to an operation of the user, the individual terminal 3 transmits data on whether the individual consents to transfer of the personal information to the personal information management device 10.

The third party terminal 4 is intended to allow a third party, such as government or municipal official or lawyer, to check out the registry data stored in the registry data storage device 30. For example, in the case of any legal problem related to transfer of personal information, a third party, such as government or municipal official or lawyer, checks out the registry data stored in the registry data storage device 30 using the third party terminal 4 and can thereby obtain an evidence related to the transfer of the personal information.

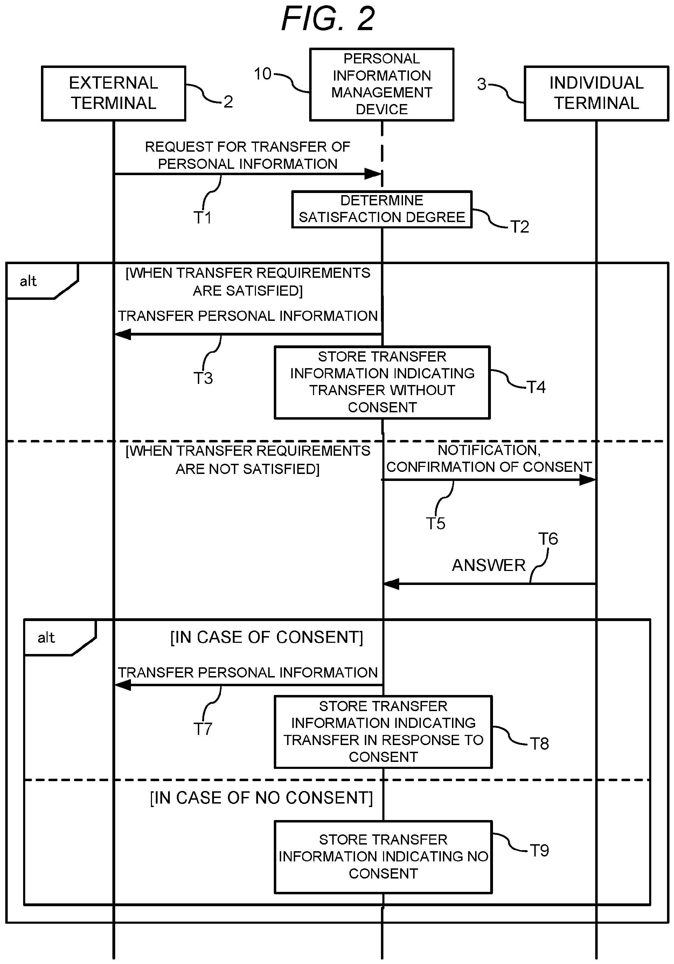

In order to facilitate an understanding, a summary of processing of personal information in the personal information management system 1 in response to a request for transfer of personal information is described with reference to FIG. 2.

When a request for transfer of personal information is received from the external terminal 2 of the corporation Y in the state B (Step T1), the personal information management device 10 of the personal information management system 1 determines whether the state B satisfies the transfer requirements (Step T2).

When the state B satisfies the transfer requirements, the personal information management device 10 transfers personal information to the external terminal 2 (Step T3), and causes transfer information, indicating that the personal information was transferred without a consent, to be stored into the registry data storage device 30 (Step T4). The personal information management device 10 then terminates the processing of personal information.

In contrast, when the state B does not satisfy the transfer requirements, the personal information management device 10 notifies an individual indicated in the personal information of reception of a request for transfer of personal information, the satisfaction information on the state B, and the risks that can be caused by transfer of the personal information, and confirms whether the individual consents to the transfer of the personal information, via the individual terminal 3 (Step T5). The individual provides an answer regarding whether the individual consents to the transfer of the personal information to the personal information management device 10, via the individual terminal 3 (Step T6).

When the individual consents to the transfer, the personal information management device 10 transfers the personal information to the external terminal 2 (Step T7), and causes transfer information, indicating that the personal information was transferred in response to the consent, to be stored into the registry data storage device 30 (Step T8). The personal information management device 10 then terminates the processing of personal information.

In contrast, when the individual does not consent to the transfer, the personal information management device 10 causes transfer information, indicating no consent of the individual, to be stored into the registry data storage device 30 (Step T9). The personal information management device 10 then terminates the processing of personal information.

As explained above, the personal information management system 1 processes the personal information subject to a transfer request and causes transfer information to be stored into the registry data storage device 30, depending on whether the state B satisfies the transfer requirements and whether the individual consents to the transfer.

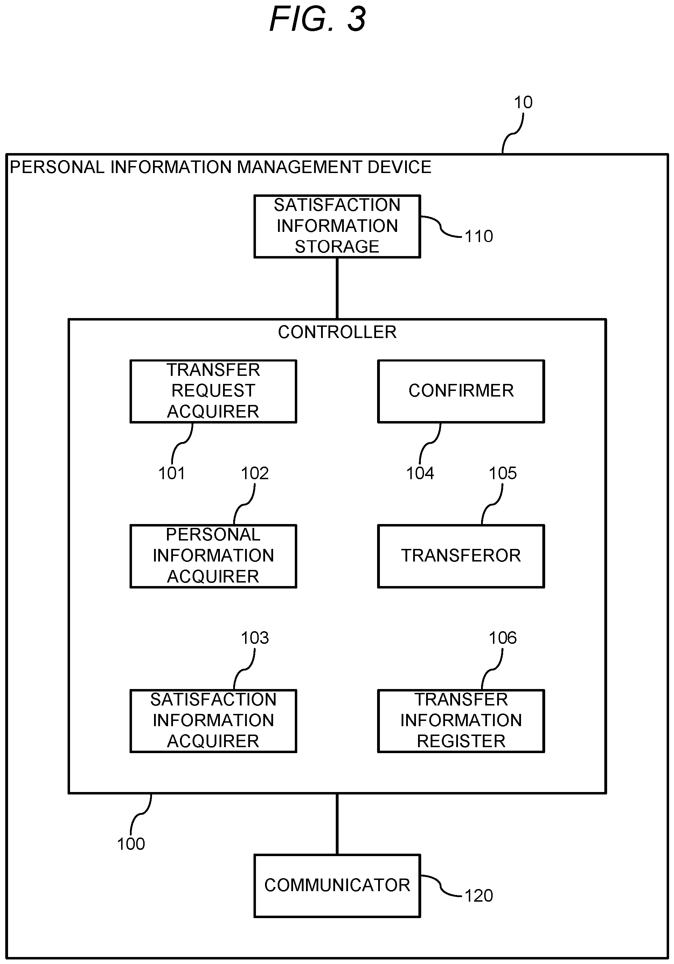

A functional configuration of the personal information management device 10 is described with reference to FIG. 3. The personal information management device 10 includes a controller 100, a satisfaction information storage 110, and a communicator 120.

The controller 100 performs comprehensive control of the personal information management device 10. The controller 100 includes a transfer request acquirer 101, a personal information acquirer 102, a satisfaction information acquirer 103, a confirmer 104, a transferor 105, and a transfer information register 106.

The transfer request acquirer 101 acquires a request for transfer of personal information from the external terminal 2 via the communicator 120. The transfer request acquirer 101 is an example of transfer request acquisition means according to the present disclosure.

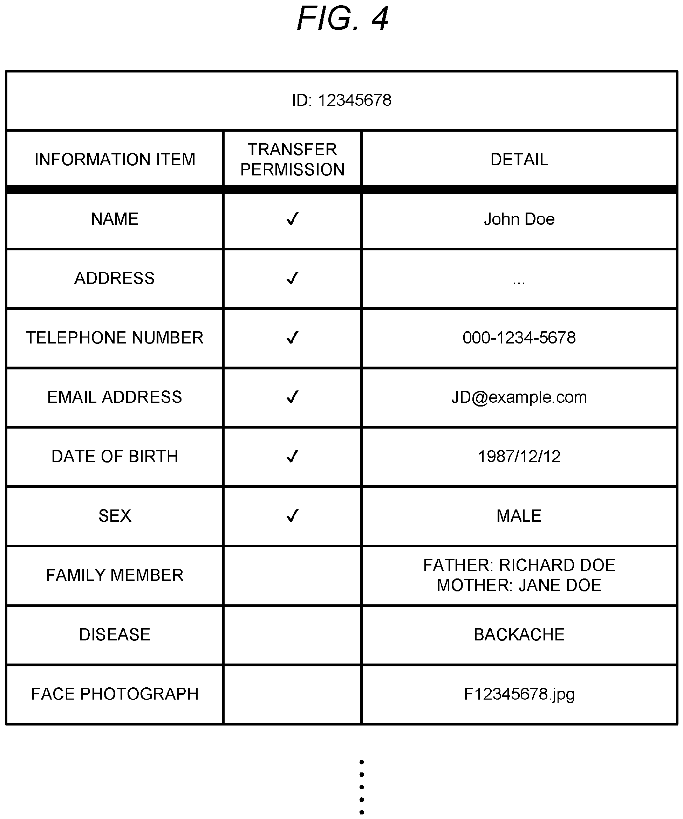

The personal information acquirer 102 acquires the personal information subject to the transfer request from the personal information storage device 20 via the communicator 120. The personal information contains, for example, an identifier (ID) associated with the individual, and information on the individual, such as name, address, and telephone number, as illustrated in FIG. 4. The personal information also contains information indicating whether each information item has transfer permission.

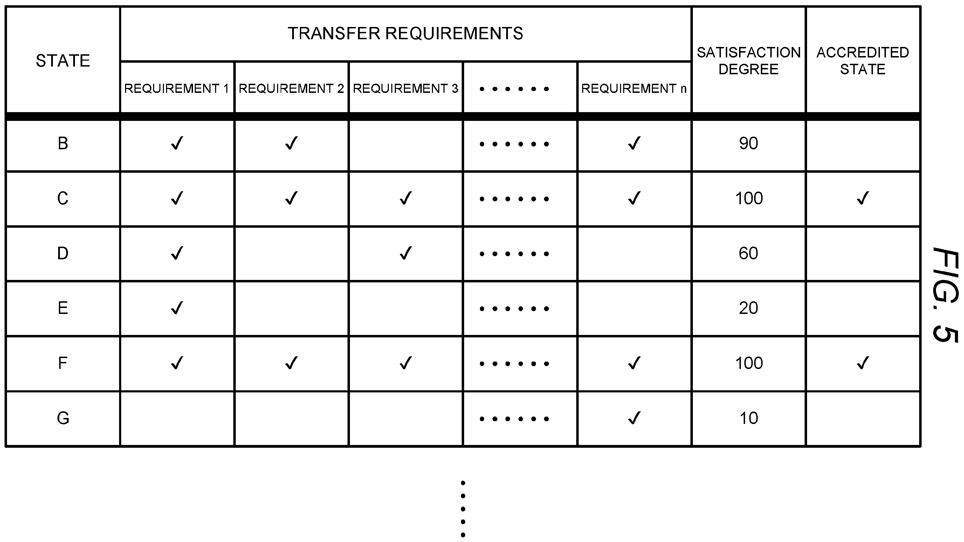

The satisfaction information acquirer 103 acquires the satisfaction information on the state B, which is the origin of the transfer request, from the satisfaction information storage 110. The satisfaction information indicates a degree to which each state satisfies the transfer requirements. The satisfaction information indicates, for example, whether each state satisfies the respective transfer requirements, what satisfaction degree the state has, and whether the state is an accredited state, as illustrated in FIG. 5. In the example illustrated in FIG. 5, the states that satisfy all the transfer requirements have a satisfaction degree of 100. The state B fails to satisfy some of the transfer requirements and has a satisfaction degree of 90, and thus is not an accredited state, in the example illustrated in FIG. 5. Alternatively, the satisfaction information acquirer 103 may acquire only the satisfaction degree as satisfaction information. The satisfaction information acquirer 103 is an example of satisfaction information acquisition means according to the present disclosure.

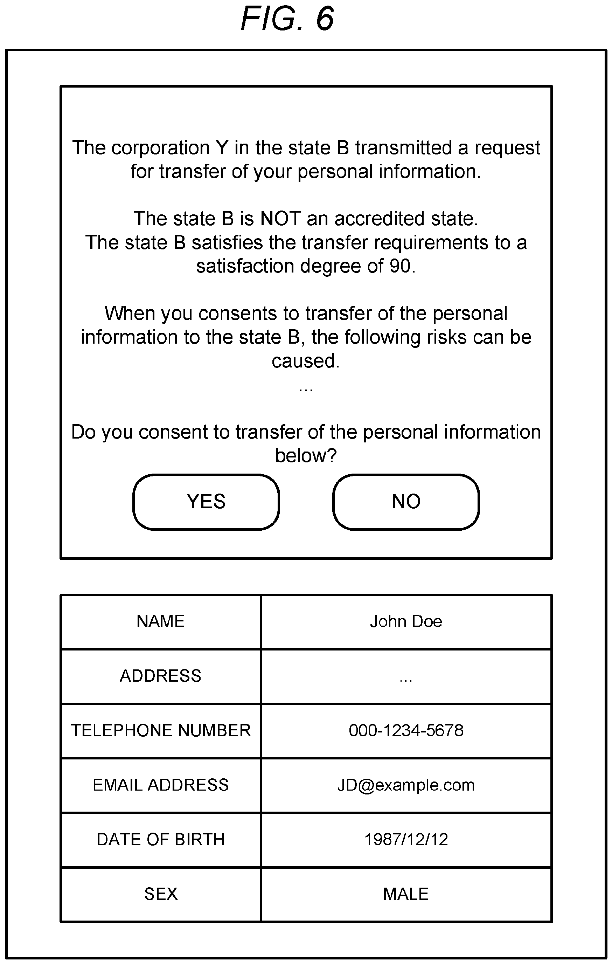

The confirmer 104 transmits a notification, which indicates reception of a request for transfer of personal information from the corporation Y in the state B, the satisfaction information on the state B, and the risks that can be caused by transfer of the personal information, and transmits an inquiry to confirm whether the individual consents to the transfer of the personal information, via the communicator 120 to the individual terminal 3. The individual terminal 3 thus displays a confirmation screen illustrated in FIG. 6, for example. The personal information presented as subjects to be transferred in FIG. 6 corresponds to the information items with transfer permission in FIG. 4. FIG. 6 shows the satisfaction degree as the satisfaction information. This confirmation screen enables the individual, who is the user of the individual terminal 3, to readily evaluate the risks that can be caused by transfer of the personal information on the basis of the satisfaction information on the state B. The confirmer 104 is an example of confirmation means according to the present disclosure.

When the communicator 120 receives information indicating that the individual consents to the transfer of the personal information from the individual terminal 3, the transferor 105 transmits the personal information to the external terminal 2 in the state B via the communicator 120. That is, the transferor 105 transfers the personal information to the state B in response to a consent of the individual to the transfer of the personal information. When the state B satisfies the transfer requirements, the transferor 105 transfers the personal information to the state B without transmission of the notification or inquiry from the confirmer 104. Only the information items with transfer permission are transferred among the personal information. The transferor 105 is an example of transfer means according to the present disclosure.

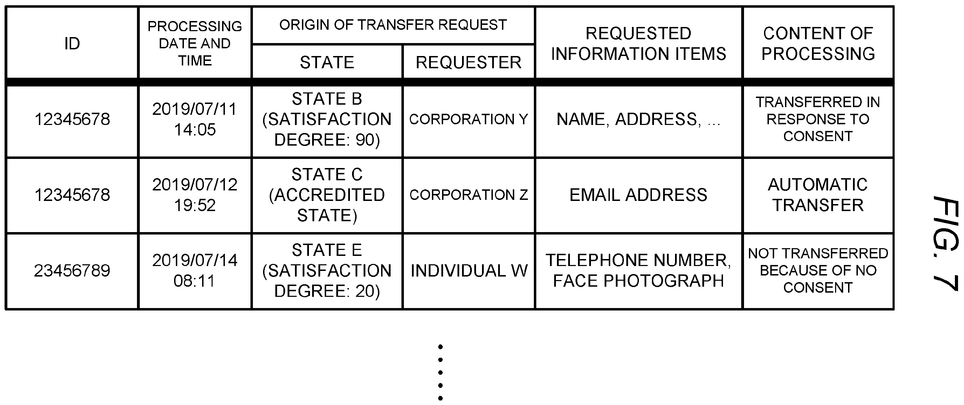

The transfer information register 106 causes transfer information related to transfer of the personal information to be stored into the registry data storage device 30. The transfer information contains, for example, the content of processing of the personal information in response to a request for transfer of the personal information, as illustrated in FIG. 7, which is described in detail below. The transfer information register 106 is an example of transfer information registration means according to the present disclosure.

The satisfaction information storage 110 stores satisfaction information on each state. As mentioned above, the satisfaction information stored in the satisfaction information storage 110 has a configuration illustrated in FIG. 5, for example. The satisfaction information is determined, for example, by a manager of the personal information management device 10 on the basis of the status of satisfactory acknowledgement by the European Commission.

The communicator 120 communicates with the external terminal 2, the individual terminal 3, the personal information storage device 20, and the registry data storage device 30. The communicator 120 communicates with the external terminal 2 and the individual terminal 3 via the Internet, and communicates with the personal information storage device 20 and the registry data storage device 30 via the internal network of the corporation X, for example.

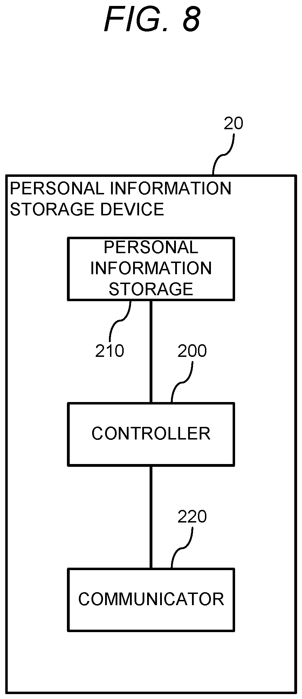

A functional configuration of the personal information storage device 20 is described with reference to FIG. 8. The personal information storage device 20 includes a controller 200, a personal information storage 210, and a communicator 220.

The controller 200 performs comprehensive control of the personal information storage device 20. The controller 200 transmits personal information stored in the personal information storage 210 via the communicator 220 to the personal information management device 10, in particular, in response to a request from the personal information acquirer 102 of the personal information management device 10.

The personal information storage 210 stores personal information to be processed by the corporation X in the personal information management system 1. As described above, the personal information stored in the personal information storage 210 has a configuration illustrated in FIG. 4, for example. The personal information storage 210 is an example of personal information storage means according to the present disclosure.

The communicator 220 communicates with the personal information management device 10. The communicator 220 communicates with the personal information management device 10 via the internal network of the corporation X, for example.

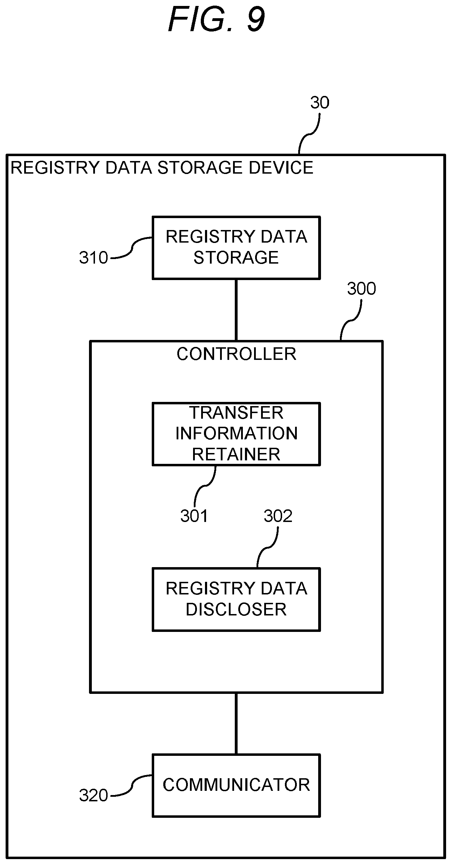

A functional configuration of the registry data storage device 30 is described with reference to FIG. 9. The registry data storage device 30 includes a controller 300, a registry data storage 310, and a communicator 320.

The controller 300 performs comprehensive control of the registry data storage device 30. The controller 300 includes a transfer information retainer 301 and a registry data discloser 302.

The transfer information retainer 301 causes transfer information to be stored into the registry data storage 310 in the form of registry data in the chronological order, in response to a request for storage from the transfer information register 106 of the personal information management device 10.

The registry data discloser 302 transmits registry data stored in the registry data storage 310 via the communicator 320 to the third party terminal 4, in response to a request from the third party terminal 4. The registry data discloser 302 transmits the registry data to the third party terminal 4 and thereby discloses the registry data to the third party. The registry data discloser 302 is an example of registry data disclosure means according to the present disclosure.

The registry data storage 310 stores transfer information in the form of registry data in the chronological order. The transfer information stored in the registry data storage 310 in the chronological order configures registry data containing information related to transfer of personal information in the chronological order. The registry data is established in a format, such as blockchain or distributed database, that is less susceptible to tampering of data, as mentioned above. The registry data storage 310 is an example of registry data storage means according to the present disclosure.

As described above, the transfer information has a configuration illustrated in FIG. 7, for example. Each row in FIG. 7 corresponds to each piece of transfer information. In the example illustrated in FIG. 7, the transfer information contains an ID, an origin of the transfer request, requested information items, and the content of processing. The transfer information does not contain information for directly identifying the individual, because the transfer information may be disclosed as a legal evidence to a third party, as explained above. In the case where a third party, such as government or municipal official or lawyer, desires to confirm whether the individual has consented to the transfer request, the third party first contacts to the corporation X and obtains the ID of the individual. The third party then searches the registry data for the transfer information on the obtained ID, and thereby finds out whether the individual has consented to the transfer request.

The communicator 320 communicates with the personal information management device 10 and the third party terminal 4. The communicator 320 communicates with the personal information management device 10 via the internal network of the corporation X, and communicates with the third party terminal 4 via the Internet, for example.

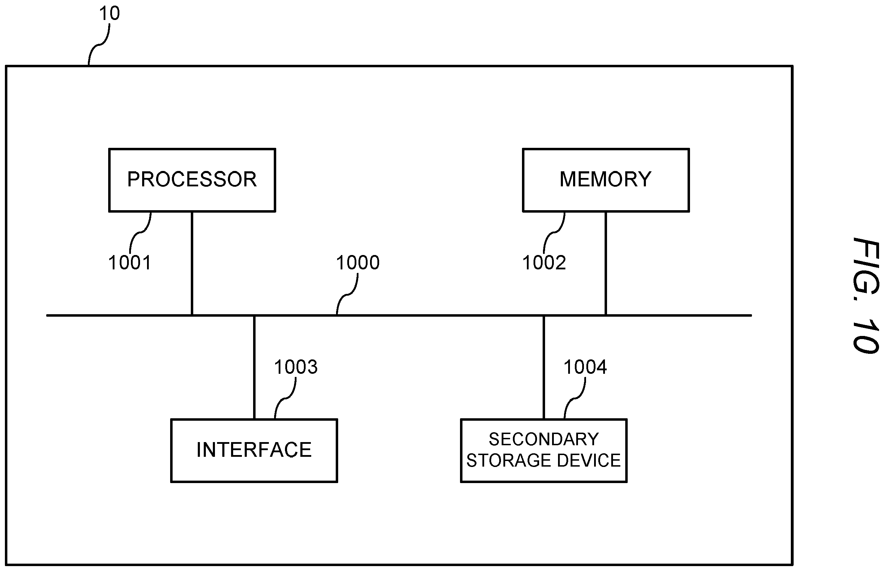

An exemplary hardware configuration of the personal information management device 10 is described with reference to FIG. 10. The personal information management device 10 illustrated in FIG. 10 is achieved by a computer, such as personal computer or micro-controller.

The personal information management device 10 is equipped with a processor 1001, a memory 1002, an interface 1003, and a secondary storage device 1004 connected to each other via buses 1000.

The processor 1001 includes a central processing unit (CPU), for example. The processor 1001 loads an operational program stored in the secondary storage device 1004 into the memory 1002 and executes the operational program, to thereby perform the individual functions of the personal information management device 10.

The memory 1002 is a main storage including a random access memory (RAM), for example. The memory 1002 stores an operational program read from the secondary storage device 1004 by the processor 1001. The memory 1002 also serves as a working memory during execution of the operational program by the processor 1001.

The interface 1003 includes an input/output (I/O) interface, such as network interface, serial port, or universal serial bus (USB) port. The interface 1003 performs the functions of the communicator 120.

The secondary storage device 1004 includes a flash memory, hard disk drive (HDD), or solid state drive (SSD), for example. The secondary storage device 1004 stores operational programs to be executed by the processor 1001. The secondary storage device 1004 performs the functions of the satisfaction information storage 110.

The personal information storage device 20, the registry data storage device 30, the external terminal 2, the individual terminal 3, and the third party terminal 4 can also be achieved by the hardware configuration illustrated in FIG. 10.

Referring beck to FIG. 2, exemplary processing of personal information in the personal information management device 10 is described.

The transfer request acquirer 101 of the controller 100 of the personal information management device 10 acquires a request for transfer of personal information from the external terminal 2 in the state B (Step T1). The personal information acquirer 102 of the controller 100 then acquires personal information subject to the transfer request from the personal information storage device 20.

The satisfaction information acquirer 103 of the controller 100 then acquires the satisfaction information on the state B stored in the satisfaction information storage 110. The controller 100 then determines whether the state B satisfies the transfer requirements (Step T2).

When the state B is determined to satisfy the transfer requirements in Step T2, the transferor 105 of the controller 100 transfers the personal information to the external terminal 2 in the state B (Step T3). The transfer information register 106 of the controller 100 causes transfer information, indicating that the personal information was transferred without a consent of the individual, to be stored into the registry data storage device 30 (Step T4). The controller 100 then terminates the processing of personal information.

In contrast, when the state B is determined not to satisfy the transfer requirements in Step T2, the confirmer 104 of the controller 100 notifies the individual terminal 3 of reception of the request for transfer of the personal information from the corporation Y in the state B, the satisfaction information on the state B, and the risks that can be caused by the transfer of the personal information, for example, and confirms with the individual whether the individual consents to the transfer of the personal information (Step T5). The controller 100 then receives an answer regarding whether the individual consents to the transfer of the personal information from the individual terminal 3 (Step T6).

When the individual consents to the transfer in the answer in Step T6, the transferor 105 transfers the personal information to the external terminal 2 in the state B (Step T7). The transfer information register 106 causes transfer information, indicating that the personal information was transferred in response to the consent of the individual, to be stored into the registry data storage device 30 (Step T8). The controller 100 then terminates the processing of personal information.

In contrast, when the individual does not consent to the transfer in the answer in Step T6, the transfer information register 106 causes transfer information, indicating no consent of the individual, to be stored into the registry data storage device 30 (Step T9). The controller 100 then terminates the processing of personal information.

The personal information management system 1 according to the embodiment has a configuration described above. In response to a request for transfer of personal information to another region different from the region where the personal information management device 10 exists, the personal information management system 1 notifies the individual of satisfaction information indicating a degree to which the other region satisfies the transfer requirements. This configuration enables the individual to readily evaluate the risks that can be caused by transfer of the personal information.

In the personal information management system 1, the transfer information is stored in the registry data storage device 30 in a tamper-proof format and can therefore be used as a legal evidence. The transfer information stored in the registry data storage device 30 can be disclosed to predetermined third parties and can readily be obtained by the third parties as a legal evidence. Since the transfer information does not contain information for directly identifying the individual, the present disclosure of the transfer information does not lead to unnecessary disclosure of personal information.

### Modification

The personal information storage device 20 existing in the state A in the above embodiment may also exist in another state. For example, the personal information storage device 20 may exist in another state within the European region or in an accredited state outside the European region. Alternatively, the personal information storage device 20 may exist in a non-accredited state provided that a consent of the individual is provided.

Although the system in the above embodiment includes only one registry data storage device 30, the system may include multiple devices to establish registry data, instead of the registry data storage device 30. For example, the registry data may be established by a distributed database system including multiple devices, or established such that the nodes constituting a blockchain are included in multiple devices in a distributed manner.

The registry data storage device 30 existing in the state A in the above embodiment may also exist in another state. The system may include multiple devices existing in multiple states to establish registry data, instead of the registry data storage device 30.

Although personal information is transferred to an accredited state without a consent in response to a transfer request in the above embodiment, the transfer of personal information to an accredited state may also accompany an inquiry to confirm whether the individual consents to the transfer.

In the above embodiment, the individual receives little benefit in the case of transfer of personal information to a non-accredited state having a low satisfaction degree. In order to solve this problem, some incentives may be provided to the individual who consents to the transfer. For example, the individual may earn points defined depending on the satisfaction degree of the non-accredited state after transfer of the personal information. The points in this case can be exchanged for money or products, for example. The introduction of incentives can facilitate personal information to be utilized by corporations in states having low satisfaction degrees.

In the above embodiment, the confirmer 104 of the personal information management device 10 transmits information on a notification and an inquiry to the individual terminal 3 and thereby achieves notification and confirmation with the individual. Alternatively, the confirmer 104 may achieve notification and confirmation with the individual in another procedure. For example, the confirmer 104 may achieve notification and confirmation with the individual by sending an email to the email address indicated in the personal information, or sending a facsimile to the telephone number indicated in the personal information.

Although the personal information management device 10 is equipped with the secondary storage device 1004 in the hardware configuration illustrated in FIG. 10, this configuration is a mere example. The secondary storage device 1004 may be disposed outside the personal information management device 10, and the personal information management device 10 and the secondary storage device 1004 may be connected to each other via the interface 1003. In this configuration, the secondary storage device 1004 may be a removable medium, such as USB flash drive or memory card.

The personal information management device 10 may be configured by a dedicated circuit including an application specific integrated circuit (ASIC) or a field programmable gate array (FPGA), instead of the hardware configuration illustrated in FIG. 10. Alternatively, in the hardware configuration illustrated in FIG. 10, some of the functions of the personal information management device 10 may be performed by a dedicated circuit connected to the interface 1003, for example.

The program used in the personal information management device 10 may be stored in a non-transitory computer-readable recording medium, such as compact disc read only memory (CD-ROM), digital versatile disc (DVD), USB flash drive, memory card, or HDD to be distributed. When this program is installed in a specific or general purpose computer, the program can cause the computer to function as the personal information management device 10.

Alternatively, the program may be stored in a storage device included in another server on the Internet and downloaded from the server to a computer.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

the present disclosure is preferably applicable to management of personal information.

### Reference Signs List

- 1: Personal information management system
- 2: External terminal
- 3: Individual terminal
- 4: Third party terminal
- 10: Personal information management device
- 20: Personal information storage device
- 30: Registry data storage device
- 100: Controller
- 101: Transfer request acquirer
- 102: Personal information acquirer
- 103: Satisfaction information acquirer
- 104: Confirmer
- 105: Transferor
- 106: Transfer information register
- 110: Satisfaction information storage
- 120: Communicator
- 200: Controller
- 210: Personal information storage
- 220: Communicator
- 300: Controller
- 301: Transfer information retainer
- 302: Registry data discloser
- 310: Registry data storage
- 320: Communicator
- 1000: Bus
- 1001: Processor
- 1002: Memory
- 1003: Interface
- 1004: Secondary storage device

## Claims

1. A personal information management device comprising:
transfer request acquisition means for acquiring a transfer request indicating a request for transfer of personal information processed by the personal information management device to a second region that is different from a first region where the personal information management device exists;
satisfaction information acquisition means for acquiring satisfaction information indicating a degree to which the second region satisfies transfer requirements for transfer of the personal information to the second region;
confirmation means for notifying an individual of the satisfaction information and confirming with the individual whether the individual consents to the transfer of the personal information to the second region, the individual being indicated in the personal information; and
transfer means for transferring the personal information to the second region in response to the consent.

2. The personal information management device according to claim 1, wherein the transfer means transfers the personal information to the second region without a consent of the individual to the transfer of the personal information when the second region satisfies the transfer requirements.

3. The personal information management device according to claim 1 or 2,
wherein the second region satisfies the transfer requirements when the second region is a region accredited by an accreditation organization.

4. A personal information management system comprising:
a personal information management device; and
personal information storage means for storing personal information, wherein
the personal information management device comprises:
transfer request acquisition means for acquiring a transfer request indicating a request for transfer of the personal information stored in the personal information storage means to a second region that is different from a first region where the personal information management device exists;
satisfaction information acquisition means for acquiring satisfaction information indicating a degree to which the second region satisfies transfer requirements for transfer of the personal information to the second region;
confirmation means for notifying an individual of the satisfaction information and confirming with the individual whether the individual consents to the transfer of the personal information to the second region, the individual being indicated in the personal information; and
transfer means for transferring the personal information to the second region in response to the consent.

5. The personal information management system according to claim 4, further comprising:
registry data storage means for storing, in form of registry data, transfer information that is information related to the transfer of the personal information, wherein
the personal information management device further comprises transfer information registration means for causing the transfer information to be stored into the registry data storage means.

6. The personal information management system according to claim 5, further comprising registry data disclosure means for disclosing the registry data stored in the registry data storage means to a third party.

7. The personal information management system according to claim 5 or 6, wherein the registry data storage means stores the transfer information in a tamper-proof format.

8. A personal information management method comprising:
acquiring a transfer request indicating a request for transfer of personal information to a second region that is different from a first region where the personal information management method is executed;
acquiring satisfaction information indicating a degree to which the second region satisfies transfer requirements for transfer of the personal information to the second region;
notifying an individual of the satisfaction information, the individual being indicated in the personal information;
confirming with the individual whether the individual consents to the transfer of the personal information to the second region; and
transferring the personal information to the second region in response to the consent.

9. A program causing a computer to function as:
transfer request acquisition means for acquiring a transfer request indicating a request for transfer of personal information processed by the computer to a second region that is different from a first region where the computer exists;
satisfaction information acquisition means for acquiring satisfaction information indicating a degree to which the second region satisfies transfer requirements for transfer of the personal information to the second region;
confirmation means for notifying an individual of the satisfaction information and confirming with the individual whether the individual consents to the transfer of the personal information to the second region, the individual being indicated in the personal information; and
transfer means for transferring the personal information to the second region in response to the consent.
